# EUROPÄISCHE PATENTANMELDUNG

(11) **EP 4 187 029 A1**
(43) Veröffentlichungstag der Anmeldung: **31.05.2023**
(21) Anmeldenummer: 22207738.0
(22) Anmeldetag: 16.11.2022
(51) Int. Cl.: E03B 7/07, E03B 9/02, E03B 9/04, E03B 9/08, F16K 27/00

(54) **AN EINEM HYDRANTEN ZU INSTALLIERENDE ÜBERWACHUNGSEINRICHTUNG**

(30) Priorität: 26.11.2021 CH 0706062021
(71) Anmelder: Hinni AG, 4105 Biel-Benken (CH)
(72) Erfinder: Heinis, Rolf, 4106 Therwil (CH); Jermann, Dieter, 4242 Laufen (CH)
(74) Vertreter: Ullrich, Gerhard

(57) **Zusammenfassung**

Die Überwachungseinrichtung **(3)** ist zur Installation an einem Hydranten **(9)** konzipiert. Der Hydrant **(9)** besitzt ein zum Anschluss an ein Wasserleitungsnetz bestimmtes Unterteil **(2),** auf dem ein Oberteil **(1)** zur Ausbildung eines Überflurhydranten oder ein Unterflur-Aufsatz zur Ausbildung eines Unterflurhydranten aufgesetzt ist. Die Überwachungseinrichtung **(3)** hat eine Sensor-Baugruppe **(35),** welche zumindest einen Sensor **(37)** zur Zustandserfassung am Hydranten **(9)** und/oder im Wasserleitungsnetz umfasst. Als Bestandteil der Überwachungseinrichtung **(3)** ist zu deren Betrieb eine ausserhalb des Hydranten **(9)** positionierte Stromquelle vorhanden. Ferner hat die Überwachungseinrichtung **(3)** einen Funkbaustein **(33)** mit einer Antenne **(331)** zur Übermittlung der vom zumindest einen Sensor **(37)** erfassten Signale an eine Überwachungsstation. Ein zur Überwachungseinrichtung **(3)** gehörender Dichtring **(36)** ist zwischen Steigrohr **(2)** und Oberteil **(1)** bzw. zwischen Steigrohr **(2)** und Unterflur-Aufsatz eingesetzt. Durch diesen Dichtring **(36)** erstreckt sich ein Kabel **(38)** als elektrische Verbindung von dem zumindest einen im Hydranten **(9)** angeordneten Sensor **(37)** nach aussen zur Stromquelle und zum Funkbaustein **(33).**

## Beschreibung

### Anwendungsgebiet der Erfindung

Die Erfindung betrifft eine an einem Hydranten zu installierende Überwachungseinrichtung. Der Hydrant hat ein zum Anschluss an ein Wasserleitungsnetz bestimmtes Steigrohr, auf dem ein Oberteil zur Ausbildung eines Überflurhydranten oder ein Unterflur-Aufsatz zur Ausbildung eines Unterflurhydranten aufgesetzt ist. Bei Höhenverstellbarkeit der Hydranten gliedert sich das Steigrohr in einen Steigrohrmantel und die darin teleskopisch steckende, in der Auszugslänge verschiebbare und fixierbare Steigrohrverlängerung, auf welcher das Oberteil bzw. der Unterflur-Aufsatz installiert ist.

Die Überwachungseinrichtung weist eine Sensor-Baugruppe auf, welche zumindest einen Sensor zur Zustandserfassung am Hydranten und/oder im Wasserleitungsnetz umfasst. Als Bestandteil der Überwachungseinrichtung ist zu deren Betrieb eine ausserhalb des Hydranten positionierte Stromquelle vorhanden. Die Überwachungseinrichtung besitzt ferner einen Funkbaustein mit einer Antenne zur Übermittlung der vom zumindest einen Sensor erfassten Signale an eine Überwachungsstation.

### Stand der Technik

Die WO 2007/012 631 A1 betrifft eine Überwachungsanordnung, mittels derer Manipulationen an Hydranten erfasst werden. Der Hydrant hat eine verschliessbare Schutzabdeckung, unter der die Bedienungselemente angeordnet sind. Die Überwachungsanordnung besteht aus einem Alarmelement, einer Stromquelle, einem Signalgeber, einem Schalter sowie einem Auslöser. Das Alarmelement ist derart positioniert, dass es beim Öffnen der Schutzabdeckung vom Auslöser getrennt wird. Der Schalter ermittelt die Trennung und stellt eine elektrische Verbindung zwischen Stromquelle und Alarmelement her. Das vom Signalgeber erzeugte Signal zeigt das Öffnen der Schutzabdeckung am Hydranten an.

Ferner sind Vorrichtungen zur Ortung einer Leckstelle am Rohrsystem eines Trinkwasserleitungsnetzes bekannt. Mittels Messung von Geräuschen, die beim Ausströmen aus einem Leck entstehen, lässt sich die Leckstelle feststellen und orten. Hierbei werden vorrangig die Messung von Körperschall mit einem Accelerometer am Rohrleitungssystem sowie die Geräuschemessung im Wasser mit einem Hydrophon praktiziert.

Die in der EP 1 052 492 A1 offenbarte Leck-Detektoranordnung dient zur Erkennung von Lecks in einem Rohrleitungssystem für Fluide. Die Anordnung umfasst einen Vibrationssensor mit einer Membran. Der Sensor ist so in eine Vorrichtung - z.B. einen Hydrant - eingebaut, dass die Membran des Sensors in direktem und permanentem Kontakt zum im Rohrleitungssystem transportierten Fluid steht. Somit werden im Fluid auftretende Schallwellen detektiert. Der Sensor hat einen Energiespeicher und ist durch eine optische oder elektronische Übertragungseinrichtung mit einem Datenlogger verbunden.

Die Anordnung gemäss der CH 691 932 A5 ist zur Lecküberwachung in einem Leitungssystem für Flüssigkeiten oder Gase bestimmt und besitzt einen Hohlzylinder, in welchem sich eine Messeinrichtung befindet. Die Messeinrichtung umfasst einen über ein Kabel mit dem Datenlogger verbundenen Schallsensor, eine Energieversorgung und eine Kontaktfläche. Die Kontaktfläche hat Verbindung zur Spindel eines Hydranten und dient der Übertragung von im Leitungsnetz durch ein Leck ausgelösten Körperschallwellen auf die Messeinrichtung. Die Schallwellen werden durch die Flüssigkeit im Leitungsrohr und dessen Wandung zum Hydranten geleitet, wo sie über die Spindel und die Kontaktfläche auf den Sensor gelangen. Hier erfolgt die Umwandlung der Körperschallwellen in elektronische Signale, welche über das Kabel in den Datenlogger übertragen werden. Der Datenlogger zeichnet zu bestimmten Zeiten eine oder mehrere Messungen auf und speichert diese. Das Ablesen der Messdaten kann z.B. direkt an einem Display am Schallsensor erfolgen.

Im Prospekt "Kontrollsystem Lorno", Ausgabe PRODOC.D5/2006V01, der Hinni AG, CH-4105 Biel-Benken / Schweiz, wird eine Messvorrichtung mit einem Hydrophon offeriert, welches am Hauptventil eines Hydranten - dem Rohrleitungsnetz zugewandt - sitzt. Vom Hydrophon erstreckt sich eine Signalleitung durch die Ventilstange zu einer unterhalb des Spindellagers angebrachten Elektronikeinheit, die von einer integrierten Batterie betrieben wird. Das Hydrophon nimmt im Wasser auftretende Schallwellen direkt auf, ausserdem werden Wasserbezüge und Füllstand von einer Sensorik der Elektronikeinheit erfasst. Die Signale werden von einer zur Elektronikeinheit gehörenden, im Hydranten sitzenden internen Sendeantenne auf eine Aussenantenne übertragen und von hier - eventuell über Zwischenstation an weitere derart ausgestattete Hydranten - auf eine Überwachungszentrale geleitet.

Die EP 2 749 860 B1 schliesslich hat ebenfalls eine Überwachungseinrichtung für ein Wasserleitungsnetz, die an einem Hydranten installiert ist, zum Gegenstand. Hierbei hat die Überwachungseinrichtung eine Signaleinheit, welche zumindest eine Detektoreinheit zur Zustandserfassung im Wasserleitungsnetz und/oder am Hydranten aufweist. Zur Stromversorgung der Signaleinheit ist eine Batterie vorgesehen, und zur Übermittlung der von der zumindest einen Detektoreinheit erfassten Signale dient eine Sendeantenne. Die Signaleinheit umfasst ferner ein auf dem Steigrohr bzw. auf einer Steigrohrverlängerung montiertes Basisteil, welches einen Axialdurchgang und ein von aussen zugängliches Aufnahmefach zur Unterbringung der Batterie hat.

### Aufgabe der Erfindung

Der Erfindung liegt die Aufgabe zugrunde, eine verbesserte, an einem Hydranten zu installierende Überwachungseinrichtung zu schaffen, welche zur Zustandserfassung am Hydranten und/oder im an den Hydranten angeschlossenen Wasserleitungsnetz dient und den apparativen Aufwand minimiert sowie den Service vereinfacht. Ausserdem muss die Einrichtung Raum für weitere Bauteile bieten, mittels derer zusätzliche Funktionen am Hydranten realisierbar sind, ohne dabei die angestammten Funktionen des Hydranten zu beeinträchtigen.

### Übersicht über die Erfindung

Die Überwachungseinrichtung ist zur Installation an einem Hydranten bestimmt. Der Hydrant besitzt ein zum Anschluss an ein Wasserleitungsnetz vorgesehenes Steigrohr, auf dem ein Oberteil zur Ausbildung eines Überflurhydranten oder ein Unterflur-Aufsatz zur Ausbildung eines Unterflurhydranten aufgesetzt ist. Die Überwachungseinrichtung hat eine Sensor-Baugruppe, welche zumindest einen ersten Sensor zur Zustandserfassung am Hydranten und/oder im Wasserleitungsnetz umfasst. Vorhanden ist eine ausserhalb des Hydranten positionierte Stromquelle zum Betrieb der Überwachungseinrichtung als deren Bestandteil. Die Überwachungseinrichtung hat ferner einen Funkbaustein mit einer Antenne zur Übermittlung der vom ersten Sensor erfassten Signale an eine Überwachungsstation. Ein zur Überwachungseinrichtung gehörender Dichtring ist zwischen Steigrohr und Oberteil bzw. zwischen Steigrohr und Unterflur-Aufsatz eingesetzt. Ein Kabel erstreckt sich durch den Dichtring als elektrische Verbindung von dem zumindest ersten im Hydranten angeordneten Sensor nach aussen zur Stromquelle und zum Funkbaustein.

Das Kabel hat die Gestalt eines Flachbandkabels und ist z.B. als gedruckte Leiterbahn ausgebildet. Das Kabel ist im Dichtring eingebettet und durch diesen radial hindurchgeführt, nämlich einerseits peripher nach aussen und andererseits nach innen zu dem zumindest ersten Sensor. Im Bereich des Durchragens durch den Dichtring ist das Kabel vollständig vom Material des Dichtrings umhüllt oder liegt abgedichtet in einer im Dichtring vorhandenen Nut. Als Zugsicherung des in die Nut eingelegten Kabels weisen Nut und Kabel, im Bereich des Durchragens durch die Nut, zueinander komplementäre Haltekonturen auf.

Die Sensor-Baugruppe, bestehend aus dem Dichtring, dem zumindest ersten Sensor und dem Kabel ist in einer Variante einteilig ausgebildet. In einer Alternativvariante bilden der zumindest erste Sensor mit dem daran lösbar oder fest angeschlossenem Kabel ein Sensor-Set, und bei der Montage ist ein Abschnitt des Kabels abgedichtet auf dem Dichtring positionierbar.

Die Stromquelle, vorzugsweise eine Batterie, und der aus einem Elektronikelement und einer Antenne bestehende Funkbaustein sind auf einem Sockel angeordnet. Das Kabel endet am nach ausserhalb des Dichtrings gerichteten Ende mit einem Anschluss, wobei am Sockel ein Anschluss vorgesehen ist und die Anschlüsse sich miteinander lösbar verbinden lassen. Der Sockel mit darauf angeordneter Stromquelle und Funkbaustein ist von einem Gehäuse überdeckt, welches ausreichenden Durchtritt für die von der Antenne emittierten Signale erlaubt. Das Kabel ist zumindest am aus dem Hydranten herausführenden Bereich derart biegsam, um sich an die am Hydranten vorhandenen geometrischen Konturen anzupassen.

Der zumindest erste Sensor ist im Übergangsbereich zwischen Steigrohr und Oberteil bzw. zwischen Steigrohr und Unterflur-Aufsatz oder nahe des im Hydranten vorhandenen Hauptventils angeordnet. Zu dem im Übergangsbereich zwischen Steigrohr und Oberteil bzw. zwischen Steigrohr und Unterflur-Aufsatz installierten ersten Sensor ist ein zweiter Sensor nahe des im Hydranten vorhandenen Hauptventils angeordnet, wobei von diesem zweiten Sensor separate Kabeladern über das Kabel zur Sendeeinheit führen. Die vom ersten Sensor und die vom zweiten Sensor detektierten Signale weisen eine unterschiedliche Charakteristik auf, somit sind die von der Antenne zur Überwachungsstation übermittelten Daten als Statusmeldung auf den Hydranten oder auf das Wasserleitungsnetz bezogen erkennbar.

### Kurzbeschreibung der beigefügten Zeichnungen

Es zeigen:
- Figur 1A -: einen kompletten Überflurhydranten, bestehend aus Steigrohr und Oberteil, mit installierter Überwachungseinrichtung, in Perspektivansicht;
- Figur 1B -: das vergrösserte Detail X aus Figur 1A im Vertikalschnitt;

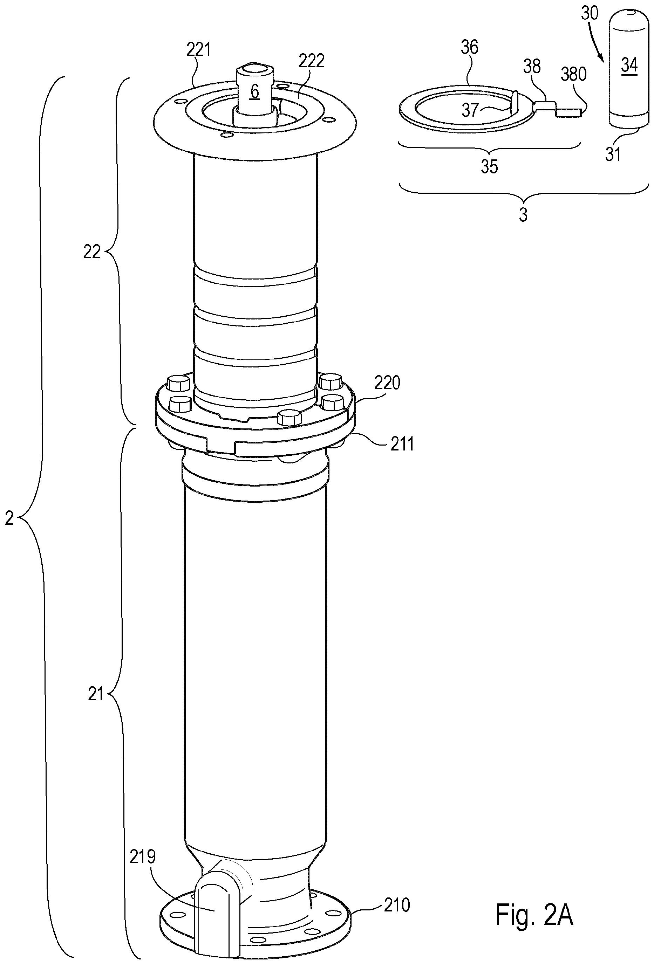

- Figur 2A -: das Steigrohr des Hydranten aus Figur 1A, bestehend aus Steigrohrmantel und daraus teleskopisch ausziehbarer Steigrohrverlängerung, mit angenäherter Überwachungseinrichtung, in Perspektivansicht;

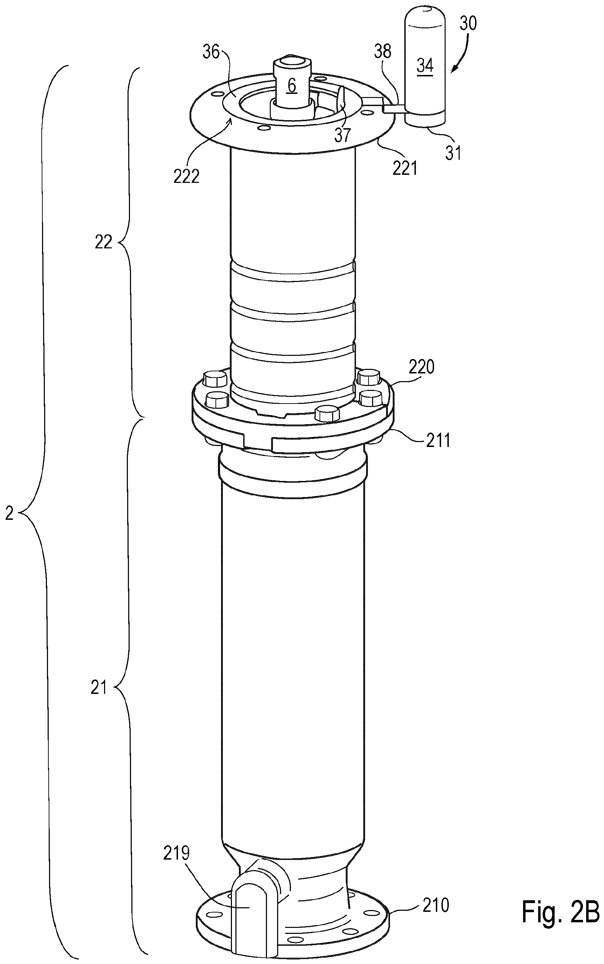

- Figur 2B -: die Anordnung gemäss Figur 2A, mit auf dem Oberteil aufgesetzter Überwachungseinrichtung, in Perspektivansicht;
- Figur 3A -: die Überwachungseinrichtung aus Figur 2A, in perspektivischer Explosivansicht von oben;
- Figur 3B -: die Überwachungseinrichtung gemäss Figur 3A, in perspektivischer Unteransicht;
- Figur 4A -: die Überwachungseinrichtung aus Figur 3A, mit dem Dichtring im Teilschnitt, in perspektivischer Explosivansicht von oben;
- Figur 4B -: die Anordnung gemäss Figur 3A, in perspektivischer Unteransicht;

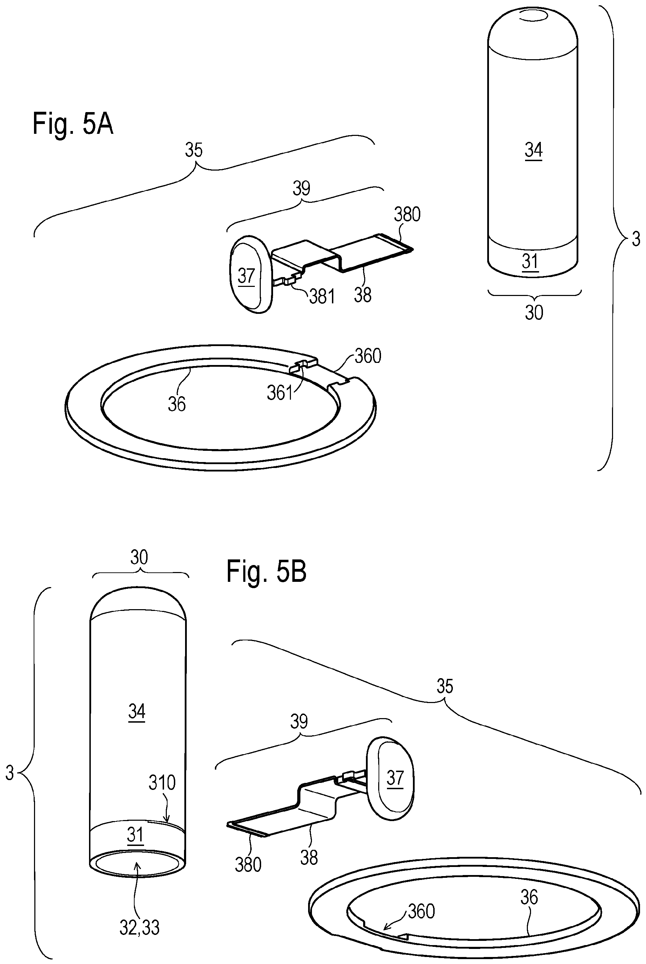

- Figur 5A -: die Überwachungseinrichtung aus Figur 3A, in alternativer mehrteiliger Ausführung der Sensor-Baugruppe, in perspektivischer Explosivansicht von oben; und
- Figur 5B -: die Anordnung gemäss Figur 5A, in perspektivischer Unteransicht.

### Ausführungsbeispiel

Mit Bezug auf die beiliegenden Zeichnungen erfolgt nachstehend die detaillierte Beschreibung eines Ausführungsbeispiels der erfindungsgemässen Überwachungseinrichtung, welche zur Installation an einem Hydranten und zur Zustandserfassung an diesem und/oder im an den Hydranten angeschlossenen Wasserleitungsnetz bestimmt ist. Der beiliegende Zeichnungssatz geht von einem Überflurhydranten aus; die Überwachungseinrichtung ist jedoch gleichermassen für Unterflurhydranten geeignet.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A und 1B

Der dargestellte Hydrant **9** hat die Konfiguration eines Überflurhydranten. Das Unterteil **2** ist zumeist in Verbindung mit einem hier nicht gezeigten Einlaufbogen zum Anschluss an das Wasserleitungsnetz bestimmt. Das Unterteil **2** ist vorteilhaft zweiteilig ausgebildet und setzt sich aus dem Steigrohrmantel **21** und der darin steckenden teleskopisch höheneinstellbaren Steigrohrverlängerung **22** zusammen. Zur Verschraubung mit dem Einlaufbogen oder direkt mit dem Wasserleitungsnetz dient der untere Flansch **210** am Steigrohrmantel **21,** das im unteren Bereich ferner den Entwässerungsbogen **219** aufweist, welcher nach Wasserentnahme zur Entleerung des Hydranten **9** vorgesehen ist. Die Fixierung der im Erdreich an die Einbautiefe angepassten Auszugshöhe der Steigrohrverlängerung **22** geschieht mittels des oberen Flansches **211** am Steigrohrmantel **21** zusammen mit dem aufgesetzten Spannflansch **220** und der Verschraubung **225.** Ein derart höhenverstellbarer Hydrant **9** ist z.B. Gegenstand der EP 0 717 156 B1.

Eine weitere Verschraubung zwischen dem oberen Flansch **221** der Steigrohrverlängerung **22** und einem Losflansch **101** bildet die Verbindung zwischen der Steigrohrverlängerung **22** und dem Oberteil **1.** Der Verbund der Flansche **221,101** wird von einem Fundamentring **10** umrandet, der sich bis auf die Höhe des, am unteren Ende des Oberteils **1** vorhandenen Radialsimses **100** erstreckt. Im oberen Bereich des Oberteils **1** befinden sich die Schlauchanschlüsse **13,** die von den Verschlusskappen **12** abgedeckt sind. Der Kopf des Oberteils **1** wird in der gezeigten Ausführung von einem hutförmigen Schutzdeckel **11** überragt, aus dessen Aussparung das obere, vierkantförmige Ende der Spindelverlängerung **14** hervorsteht, um mit einem Werkzeug zur Betätigung des hier nicht gezeigten Hauptventils ansetzen zu können. Die Überwachungseinrichtung **3** ist im Wesentlichen im Übergangsbereich zwischen Steigrohrverlängerung **22** und Oberteil **1** installiert.

Oben in der Steigrohrverlängerung **22** ist das Spindellager **8** positioniert, in das die sich abwärts, zum Hauptventil erstreckende Ventilstange **4** eingreift. Von oben in das Spindellager **8** greift der Spindelaufsatz **6** ein, in dem die Spindelverlängerung **14** steckt. In einer oberseitigen Ringnut **222** des oberen Flansches **221** liegt der zur Überwachungseinrichtung **3** gehörende Dichtring **36,** auf dem das untere Ende des Oberteils **1** aufsetzt. Durch die Ringbreite des Dichtrings **36** läuft ein Kabel **38** - vorzugsweise als Flachbandkabel und z.B. als gedruckte Leiterbahn ausgebildet -, an das ein im Innenraum des Hydranten **9** hängender Sensor **37** angeschlossen ist. Das Kabel **38** setzt sich weiter zwischen dem oberen Flansch **221** und dem Losflansch **101** fort und führt peripher nach aussen zum Anschluss an die Sendeeinheit **30,** welche aus dem Sockel **31** und dem darauf angeordneten Gehäuse **34** besteht. Unter dem Gehäuse **34** ist die Stromquelle, vorzugsweise in Gestalt einer Batterie **32,** und der Funkbaustein **33** verborgen.

### Figuren 2A und 2B

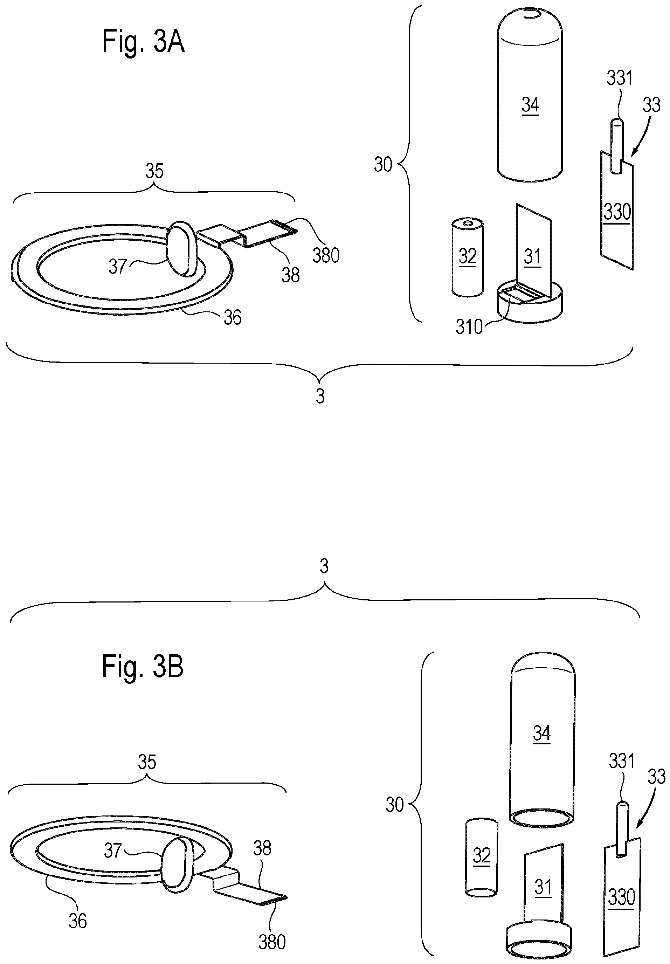

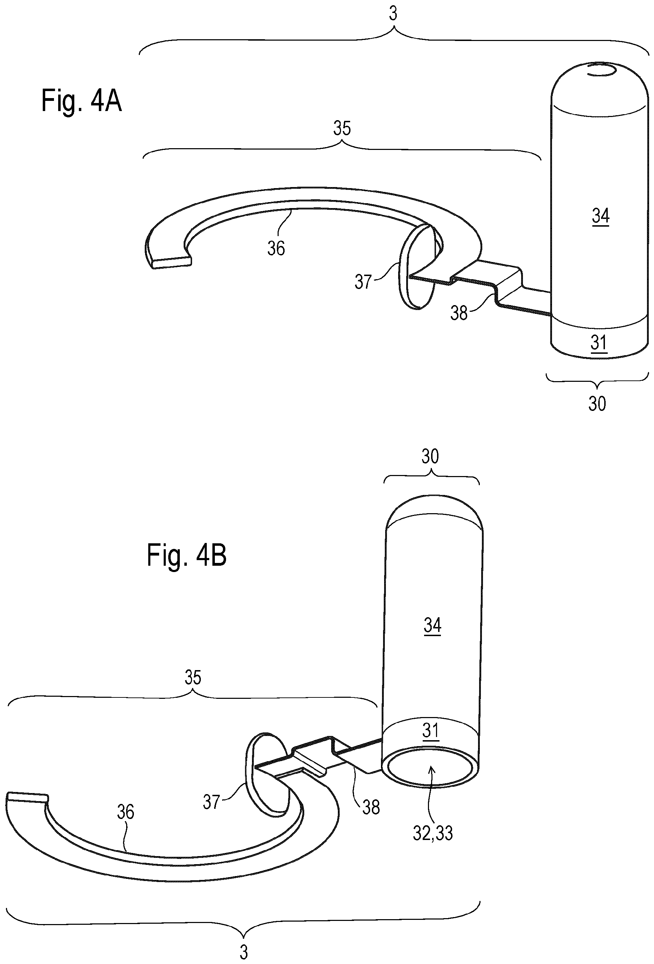

Beim Montageablauf in der Praxis wird zuerst der Zusammenbau aus Dichtring **36,** Kabel **38** und Sensor **37** als Sensor-Baugruppe **35** auf den oberen Flansch **221** an der Steigrohrverlängerung **22** in der konzentrischen Ringnut **222** platziert. Dann, nach dem Montieren des Fundamentrings **10** und des Oberteils **1** auf der Steigrohrverlängerung **22** wird die Sendeeinheit **30** an das freie Ende des Kabels **38** herangeführt, welches nach aussen ragt, und mit dem Anschluss **380** des Kabels **38** verbunden. Am anderen Ende des Kabels **38** ist der Sensor **37** angeschlossen, der im Inneren des Hydranten **9** hängt. Der Sensor **37** dient dazu, den Betriebsstatus im Hydranten **9,** wie z.B. Wasserentnahme, Wasserqualität oder den Ruhezustand, zu erfassen. Vom Sensor **37** gelangt ein entsprechendes Signal über das Kabel **38** an die Sendeeinheit **30** und wird von deren Antenne **331** (siehe Figuren 3A-4B) an eine Überwachungszentrale ausgesendet.

Soll alternativ oder zusätzlich der Zustand im angeschlossenen Wasserleitungsnetz, insbesondere eine Leckortung, detektiert werden, kann es funktionsbedingt erforderlich sein, dass man mit verlängertem Kabel **38** den einen Sensor **37** im Hydranten **9** tiefer, also näher am Wasserleitungsnetz, positioniert oder einen zweiten Sensor tiefer im Hydranten **9** vorsieht, von dem separate Kabeladern über das Kabel **38** bis zur Sendeeinheit **30** mit der Antenne **331** führen. Durch eine unterschiedliche Charakteristik der detektierten Signale werden der Status am Hydranten **9** und der Zustand im Wasserleitungsnetz erkannt.

Auch ein an das Wasserleitungsnetz angeschlossener Hydrant in der Konfiguration als Unterflurhydrant lässt sich mit der Überwachungseinrichtung **3** ausstatten. Anstelle des Oberteils **1** ist dann auf dem Steigrohr **2** bzw. auf der höhenverstellbaren Steigrohrverlängerung **22** ein Unterflur-Aufsatz montiert, wobei nun der Dichtring **36** zwischen Steigrohr **22** bzw. Steigrohrverlängerung **22** und UnterflurAufsatz eingefügt ist.

### Figuren 3A bis 4B

Die Überwachungseinrichtung **3** umfasst zunächst die Sendeeinheit **30,** welche einen Sockel **31** besitzt, der zur Energieversorgung mit einer Batterie **32** und zur Signalverarbeitung und -aussendung mit einem Funkbaustein **33** bestückt ist. Komplementär zum Anschluss **380** am Kabel **38** ist am Sockel der Anschluss **310** vorhanden. Der Funkbaustein **33** besteht aus dem Elektronikelement **330** und der Antenne **331.** Im zusammengebauten Zustand sind Batterie **32** und Funkbaustein **33** in einem auf dem Sockel **31** aufsetzenden Gehäuse **34** geschützt untergebracht.

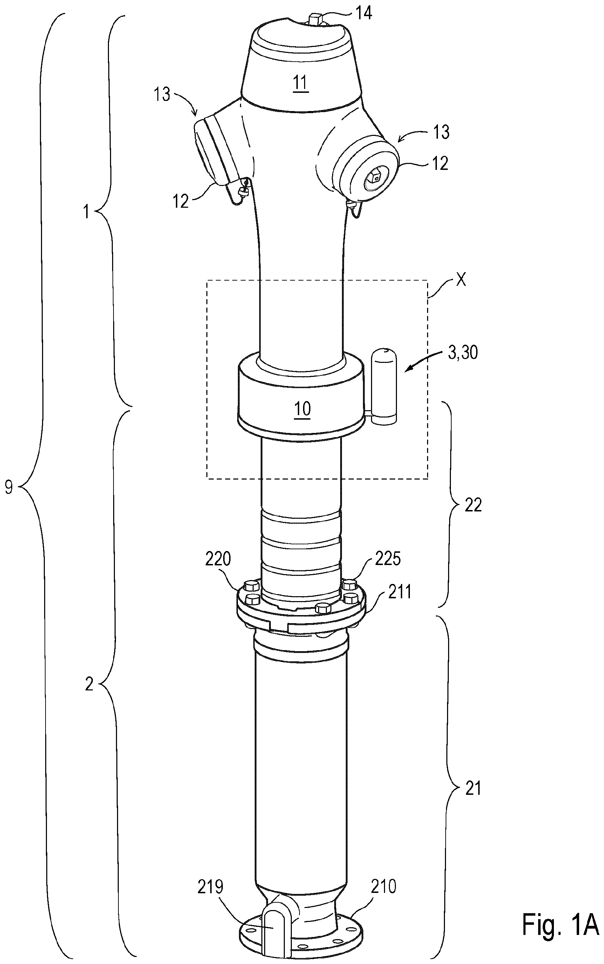

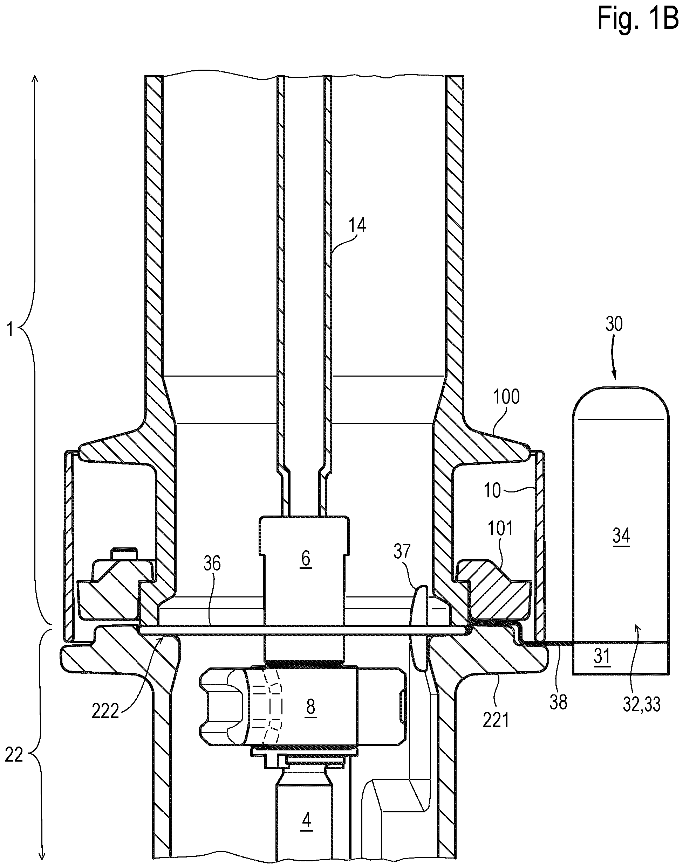

Ferner umfasst die Überwachungseinrichtung **3** eine von Dichtring **36,** Kabel **38** und Sensor **37** gebildete Sensor-Baugruppe **35.** Das Kabel **38** hat vorzugsweise die Gestalt eines Flachbandkabels, ist z.B. als gedruckte Leiterbahn beschaffen und lässt sich an die am Hydranten **9** vorhandenen geometrischen Konturen gut anpassen (siehe Figur 1B). Zur Gewährleistung sicherer Abdichtung und zum Schutz des Kabels **38** ist dieses im Dichtring **36** eingebettet und radial hindurchgeführt, einerseits peripher nach aussen bis zum Anschluss **380** und andererseits Richtung Zentrum des Dichtrings **36** zum Sensor **37.**

### Figuren 5A und 5B

Dieses Figurenpaar illustriert die Überwachungseinrichtung **3** in alternativer mehrteiliger Ausführung der Sensor-Baugruppe **35.** Aufbau und Funktion der Sendeeinheit **30** sind unverändert. Das formbare Kabel **38** ist transversal auf dem Dichtring **36** auflegbar und bildet mit dem einerseits am Kabel **38** angeschlossenen Sensor **37** das Sensor-Set **39,** wobei die Verbindung zwischen Sensor **37** und Kabel **38** fest oder gesichert lösbar gestaltet sein kann. Zur Überführung des Kabels **38** vom Sensor **37** nach ausserhalb des Hydranten **9** ist auf der Oberseite des Dichtrings **36** eine Nut **360** vorgesehen, in der ein Abschnitt des Kabels **38** eingebettet ist. Die Nut **360** könnte alternativ an der Unterseite des Dichtrings **36** vorgesehen sein. Als Zugsicherung des in die Nut **360** eingelegten Kabels **38** können Kabel **38** und Nut **360** zueinander komplementäre Haltekonturen **381,361** aufweisen. Die unterhalb der Nut **360** verbleibende Schicht am Dichtring **36** erfüllt die Dichtfunktion beispielsweise zum oberen Flansch **221** der Steigrohrverlängerung **22.** Die Abdichtung beispielsweise zum Losflansch **101** zur Montage des Oberteils **1** bewirkt vorteilhaft die Umhüllung des Kabels **38** selbst oder ein zusätzlich eingebrachtes Dichtmittel. Der am freien Ende des Kabels **38** vorhandene Anschluss **380** dient zur Verbindung mit dem Anschluss **310** an die Sendeeinheit.

## Patentansprüche

1. An einem Hydranten (**9**) zu installierende Überwachungseinrichtung (**3**), wobei:
a) der Hydrant (**9**) ein zum Anschluss an ein Wasserleitungsnetz bestimmtes Steigrohr (**2**) aufweist, auf dem ein Oberteil (**1**) zur Ausbildung eines Überflurhydranten oder ein Unterflur-Aufsatz zur Ausbildung eines Unterflurhydranten aufgesetzt ist;
b) die Überwachungseinrichtung (**3**) eine Sensor-Baugruppe (**35**) hat, welche zumindest einen ersten Sensor (**37**) zur Zustandserfassung am Hydranten (**9**) und/oder im Wasserleitungsnetz umfasst;
c) eine ausserhalb des Hydranten **(9)** positionierte Stromquelle zum Betrieb der Überwachungseinrichtung (**3**) als deren Bestandteil vorhanden ist; und
d) die Überwachungseinrichtung (**3**) ferner einen Funkbaustein (**33**) mit einer Antenne (**331**) zur Übermittlung der vom ersten Sensor (**37**) erfassten Signale an eine Überwachungsstation hat, **dadurch gekennzeichnet, dass**
e) ein zur Überwachungseinrichtung (**3**) gehörender Dichtring (**36**) zwischen Steigrohr (**2**) und Oberteil (**1**) bzw. zwischen Steigrohr (**2**) und UnterflurAufsatz eingesetzt ist; und
f) sich ein Kabel (**38**) durch den Dichtring (**36**) als elektrische Verbindung von dem zumindest ersten im Hydranten (**9**) angeordneten Sensor (**37**) nach aussen zur Batterie (**32**) und zum Funkbaustein (**33**) erstreckt.

2. Überwachungseinrichtung (**3**) nach Anspruch 1, **dadurch gekennzeichnet, dass** das Kabel (**38**) die Gestalt eines Flachbandkabels hat und z.B. als gedruckte Leiterbahn ausgebildet ist.

3. Überwachungseinrichtung (**3**) nach zumindest einem der Ansprüche 1 und 2, **dadurch gekennzeichnet, dass** das Kabel (**38**) im Dichtring (**36**) eingebettet und durch diesen radial hindurchgeführt ist, nämlich einerseits peripher nach aussen und andererseits nach innen zu dem zumindest ersten Sensor (**37**).

4. Überwachungseinrichtung (**3**) nach zumindest einem der Ansprüche 1 bis 3, **dadurch gekennzeichnet, dass** das Kabel (**38**) im Bereich des Durchragens durch den Dichtring (**36**):
a) vollständig vom Material des Dichtrings (**36**) umhüllt ist; oder
b) in einer im Dichtring (**36**) vorhandenen Nut (**360**) abgedichtet liegt.

5. Überwachungseinrichtung (**3**) nach Anspruch 4, **dadurch gekennzeichnet, dass** als Zugsicherung des in die Nut (**360**) eingelegten Kabels (**38**) die Nut (**360**) und das Kabel (**38**), im Bereich des Durchragens durch die Nut (**360**), zueinander komplementäre Haltekonturen (**361**,**381**) aufweisen.

6. Überwachungseinrichtung (**3**) nach zumindest einem der Ansprüche 1 bis 5, **dadurch gekennzeichnet, dass** die Sensor-Baugruppe (**35**) bestehend aus dem Dichtring (**36**), dem zumindest ersten Sensor (**37**) und dem Kabel (**38**):
a) einteilig ausgebildet ist; oder
b) der zumindest erste Sensor (**37**) mit dem daran lösbar oder fest angeschlossenem Kabel (**38**) ein Sensor-Set (**39**) bilden und bei der Montage ein Abschnitt des Kabels (**38**) abgedichtet auf dem Dichtring (**36**) positionierbar ist.

7. Überwachungseinrichtung (**3**) nach zumindest einem der Ansprüche 1 bis 6, **dadurch gekennzeichnet, dass** die Stromquelle und der aus einem Elektronikelement (**330**) und einer Antenne (**331**) bestehende Funkbaustein (**33**) auf einem Sockel (**31**) angeordnet sind.

8. Überwachungseinrichtung (**3**) nach Anspruch 7, **dadurch gekennzeichnet, dass**
a) das Kabel (**38**) am nach ausserhalb des Dichtrings (**36**) gerichteten Ende mit einem Anschluss (**380**) endet;
b) am Sockel (**31**) ein Anschluss (**310**) vorgesehen ist; und
c) die Anschlüsse (**310,380)** sich miteinander lösbar verbinden lassen.

9. Überwachungseinrichtung (**3**) nach zumindest einem der Ansprüche 1 bis 8, **dadurch gekennzeichnet, dass**
a) der Sockel (**31**) mit darauf angeordneter Stromquelle und Funkbaustein (**33**) von einem Gehäuse (**34**) überdeckt ist; und
b) das Gehäuse (**34**) ausreichenden Durchtritt für die von der Antenne (**331**) emittierten Signale erlaubt.

10. Überwachungseinrichtung (**3**) nach zumindest einem der Ansprüche 1 bis 9, **dadurch gekennzeichnet, dass** die Stromquelle eine Batterie (**32**) ist.

11. Überwachungseinrichtung (**3**) nach zumindest einem der Ansprüche 1 bis 10, **dadurch gekennzeichnet, dass** das Kabel (**38**) zumindest am aus dem Hydranten (**9**) herausführenden Bereich derart biegsam ist, um sich an die am Hydranten (**9**) vorhandenen geometrischen Konturen anzupassen.

12. Überwachungseinrichtung (**3**) nach zumindest einem der Ansprüche 1 bis 11, **dadurch gekennzeichnet, dass** der zumindest erste Sensor (**37**) angeordnet ist:
a) im Übergangsbereich zwischen dem Steigrohr (**2**) und dem Aufsatzrohr (**1**) bzw. zwischen Steigrohr (**2**) und dem Unterfluraufsatz; oder
b) nahe des im Hydranten (**9**) vorhandenen Hauptventils.

13. Überwachungseinrichtung (**3**) nach zumindest einem der Ansprüche 1 bis 12, **dadurch gekennzeichnet, dass**
a) zu dem im Übergangsbereich zwischen dem Steigrohr (**2**) und dem Oberteil (**1**) bzw. zwischen Steigrohr (**2**) und dem Unterflur-Aufsatz installierten ersten Sensor (**37**) ein zweiter Sensor nahe des im Hydranten (**9**) vorhandenen Hauptventils angeordnet ist; und
b) von diesem zweiten Sensor separate Kabeladern über das Kabel (**38**) zur Sendeeinheit (**30**) führen.

14. Überwachungseinrichtung (**3**) nach Anspruch 13, **dadurch gekennzeichnet, dass** die vom ersten Sensor (**37**) und die vom zweiten Sensor detektierten Signale eine unterschiedliche Charakteristik aufweisen, somit die von der Antenne (331) zur Überwachungsstation übermittelten Daten als Statusmeldung auf den Hydranten (9) oder auf das Wasserleitungsnetz bezogen erkennbar sind.
